# EUROPÄISCHE PATENTSCHRIFT

(11) **EP 2 765 013 B1**
(45) Veröffentlichungstag und Bekanntmachung des Hinweises auf die Patenterteilung: **03.10.2018**
(21) Anmeldenummer: 13170195.5
(22) Anmeldetag: 03.06.2013
(51) Int. Cl.: B60C 27/22, B60C 27/06

(54) **Zwillingsreifengleitschutzkette**
Anti-skid chain for twin wheels
Chaîne antipatinage pour roues jumelées

(30) Priorität: 12.02.2013 DE 202013100616 U
(43) Veröffentlichungstag der Anmeldung: 13.08.2014
(73) Patentinhaber: RUD Ketten Rieger & Dietz GmbH u. Co. KG, 73432 Aalen (DE)
(72) Erfinder: Schmidle, Reinhold, 73432 Aalen (DE)
(74) Vertreter: Grünecker Patent- und Rechtsanwälte PartG mbB

(56) Entgegenhaltungen:
- DE-A1- 3 941 064
- DE-C- 911 462
- DE-C- 971 551
- FR-A- 1 391 369
- GB-A- 190 913 088

## Beschreibung

Die Erfindung betrifft eine Zwillingsreifengleitschutzkette mit einem in einem am Zwillingsreifen montierten Zustand sich über die Laufflächen beider Reifen erstreckenden Laufnetz, das eine Struktur aus Fünf- oder Sechsecken aufweist, wobei eine Seite der Fünf- oder Sechsecke einen in Umfangsrichtung verlaufenden Spurstrang bildet.
Gleitschutzketten an sich sind aus dem Stand der Technik bekannt und werden dazu eingesetzt, die Traktion der angetriebenen Räder auf rutschigem Untergrund wie z.B. Schnee, Schlamm oder Eis, zu erhöhen. Zwillingsreifengleitschutzketten sind besondere Ausgestaltungen von Gleitschutzketten und ebenfalls aus dem Stand der Technik bekannt. Die Patentschrift der Anmelderin DE 971 551, eingereicht im Jahre 1944, beschreibt eine Zwillingsreifengleitschutzkette mit einer im Laufnetz angeordneten Mittelkette. Die Mittelkette verläuft zwischen den beiden Reifen in Umfangsrichtung und spannt das Laufnetz entlang der Umfangsrichtung, so dass es ein Stück weit in den Bereich zwischen beiden Reifen hineingezogen wird. Die DE 39 41 064 A1, ebenfalls von der Anmelderin, zeigt eine weitere bekannte Bauart von Zwillingsreifengleitschutzketten. Dabei spannt sich ein gemeinsames Laufnetz über beide Reifen, wobei jeder der Reifen mit einem Teil des Laufnetzes belegt ist, der in etwa einem Laufnetz für einen Einzelreifen, wie es beispielsweise in GB 13 088 beschrieben ist, entspricht. Zwischen den beiden Einzelreifen ist eine Mittelkette des Laufnetzes angeordnet.
Dieses Prinzip wird bis heute unverändert an Zwillingsreifengleitschutzketten angewendet, und findet sich nach Kenntnis der Erfinder bei nahezu allen derzeit auf dem Markt befindlichen Zwillingsreifengleitschutzketten wieder. Die bekannten Zwillingsreifengleitschutzketten erhöhen zwar die Traktion der angetriebenen Räder, weisen jedoch einige deutliche Nachteile auf, die durch die vorliegende Erfindung behoben werden sollen.
Die bekannten Zwillingsreifengleitschutzketten sind umständlich zu montieren. Die Montage einer jeden Gleitschutzkette nimmt sehr viel Zeit in Anspruch, was gerade im Transportwesen einen bedeutenden Kostenfaktor darstellt.
Ein weiterer Nachteil der bekannten Zwillingsreifengleitschutzketten ist ihr hohes Gewicht. Dieses verursacht sowohl im Betrieb der Zwillingsreifengleitschutzketten als auch beim Mitführen der Zwillingsreifengleitschutzketten im Fahrzeug einen erhöhten Treibstoffverbrauch und daher erhöhte Kosten. Des Weiteren erschwert ein hohes Gewicht der Zwillingsreifengleitschutzketten die Montage zusätzlich, da ein erhöhter Kraftaufwand zur Montage der Ketten am Reifen benötigt wird. Ebenso bedeutet ein erhöhtes Gewicht eine stärkere Belastung und dadurch Abnutzung der Fahrbahn, da die Kette bei jeder Umdrehung mit hoher Kraft auf die Fahrbahn aufschlägt und diese dabei schädigt. Diese Problematik nimmt insbesondere bei größeren Reifendurchmessern oder zunehmender Geschwindigkeit stark zu. Zu guter Letzt verursacht eine große Menge verwendeten Materials auch hohe Materialkosten und dadurch höhere Produktkosten.

Es ist also die Aufgabe der Erfindung, eine Zwillingsreifengleitschutzkette bereitzustellen, die eine gute Traktion aufweist und schnell und einfach zu montieren ist, dabei jedoch ein verringertes Gewicht aufweist.

Diese Aufgabe wird für eine Zwillingsreifengleitschutzkette der eingangs genannten Art erfindungsgemäß dadurch gelöst, dass die Fünf- oder Sechsecke in Umfangsrichtung aufeinanderfolgen und sich abwechselnd von dem Spurstrang auf der Lauffläche des einen Reifens über die Lauffläche des anderen Reifens bis wenigstens zur Reifenschulter des anderen Reifens erstrecken.

Die Fünf- oder Sechsecke sind so angeordnet, dass jedes Fünf- oder Sechseck jeweils mit einer Seite einen in Umfangsrichtung verlaufenden Spurstrang auf einem Reifen bildet und sich von diesem ausgehend, über den anderen Reifen bis wenigstens zu dessen Schulter erstreckt.

Jedes Fünf- oder Sechseck dient also mit seiner den Spurstrang bildenden Seiten der Spursicherung des Reifens beim Abrollen; mit dem Bereich, welcher sich über die Lauffläche des anderen Reifens erstreckt, der Erhöhung der Traktion des Reifens und mit dem Bereich, welcher sich bis wenigstens zur Reifenschulter des anderen Reifens erstreckt, zur Sicherung des Laufnetzes auf dem Reifen. Die Fünf- oder Sechsecke sind so angeordnet, dass sich, in Umfangsrichtung gesehen, die Spurstränge auf beiden Reifen jeweils abwechseln.

Die Struktur des Laufnetzes dient dem sicheren Sitz der Zwillingsreifengleitschutzkette auf dem Zwillingsreifen und gewährleistet gleichzeitig die geforderten Fahreigenschaften auf rutschigen Untergründen.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

So können, gemäß einer vorteilhaften Ausgestaltung, die Fünf- oder Sechsecke auf den Laufflächen an ihren den Spursträngen gegenüberliegenden Seiten offen sein. Eine offene Ausgestaltung der Sechsecke erlaubt Flexibilität bei der Anbindung des auf der Lauffläche angeordneten Teils des Laufnetzes an Elemente zur Sicherung des Laufnetzes, insbesondere an Seitenketten.

Gemäß einer weiteren vorteilhaften Ausgestaltung kann das Laufnetz Traktionsabschnitte aufweisen, welche wenigstens überwiegend diagonal zur Umfangsrichtung ausgerichtet sind und in gerader Linie, die Laufflächen beider Reifen übergreifend, auf den Laufflächen zu liegen kommen. Die Traktionsabschnitte können aus den im Wesentlichen diagonal zur Umfangsrichtung verlaufenden Seiten der Fünf- oder Sechsecke gebildet sein. Geradlinige, die Laufflächen beider Reifen übergreifende Traktionsabschnitte sind besonders vorteilhaft, da im Bereich der Traktionsabschnitte stets die Traktion für beide Reifen des Zwillingsreifens gleichzeitig gewährleistet ist. Es können also stets beide Reifen gleichzeitig zum Vortrieb beitragen.

Eine besonders treue Spurführung ergibt sich, wenn die Spurstränge jeweils im Bereich zwischen den Laufflächenmitten der beiden Reifen zu liegen kommen, da dort der Anpressdruck der Reifen auf die Fahrbahn in der Regel am größten ist.

Eine besonders vorteilhafte Ausführungsform der Zwillingsreifengleitschutzkette erhält man, wenn keine in Umfangsrichtung verlaufende Mittelkette zwischen den beiden Reifen vorhanden ist. Die erfindungsgemäß vorgesehene Struktur des Laufnetzes kann eine Mittelkette zwischen den beiden Reifen zur Sicherung der Zwillingsreifengleitschutzkette auf dem Zwillingsreifen überflüssig machen. Ohne Mittelkette kann eine Zwillingsreifengleitschutzkette wesentlich leichter und dadurch auch kostengünstiger hergestellt werden. Ebenso kann das Aufziehen der Zwillingsreifengleitschutzkette auf den Zwillingsreifen erheblich vereinfacht sein.

Gemäß einer weiteren Ausführungsform können aus den Traktionsabschnitten gebildete Seiten de Fünf- oder Sechsecke länger als die aus den Spursträngen gebildeten Seiten sein. Durch diese Ausgestaltungsform ist gewährleistet, dass die aus den Traktionsabschnitten gebildeten Seiten genügende Länge aufweisen, um die Laufflächen beider Seiten zu übergreifen. Die im Vergleich dazu kürzeren aus den Spursträngen gebildeten Seiten gewährleisten zum einen einen häufigen Wechsel der Spurstränge auf den beiden Reifen und eine häufige Abfolge der Traktionsabschnitte. Dadurch ist gleichzeitig gute Traktion und gute Spurführung gewährleistet.

Das Verhältnis der aus den Traktionsabschnitten gebildeten Seiten der Fünf- oder Sechsecke zu den aus den Spursträngen gebildeten Seiten kann insbesondere 13:7 sein. Dieses Verhältnis kann besonders vorteilhaft gleichzeitig Traktion und Spurtreue gewährleisten.

Die Spurtreue eines mit der erfindungsgemäßen Zwillingsreifengleitschutzkette ausgestatteten Zwillingsreifens kann gemäß einer weiteren Ausgestaltung dadurch weiter verbessert werden, dass die auf einem Reifen in Umfangsrichtung aufeinanderfolgenden Spurstränge miteinander fluchten.

Eine besonders vorteilhafte Ausführungsform der erfindungsgemäßen Zwillingsreifengleitschutzkette kann sich ergeben, wenn die Zwillingsreifengleitschutzkette aus Kettengliedern ohne quer zu den Kettengliedern angeordnete Aufsatzelemente gebildet ist. Wenn auf Aufsatzelemente verzichtet wird, welche die einzelnen Kettenglieder jeweils quer zu deren Ausrichtung umgreifen, so kann eine besonders leichte Kette hergestellt werden, die kostengünstig hergestellt werden kann und die Abnutzung der Fahrbahn verringert.

Gemäß einer weiteren vorteilhaften Ausführungsform können die Spurstränge vorzugsweise kürzer als eine in Umfangsrichtung verlaufende Breite einer Reifenaufstandfläche sein. Dadurch befindet sich immer wenigstens ein Traktionsabschnitt im Bereich der Reifenaufstandfläche zwischen Reifen und Untergrund.

Besonders vorteilhafte Traktionseigenschaften können dadurch erreicht werden, wenn die Zwillingsreifengleitschutzkette seitliche Traktionselemente aufweist, die aus vorzugsweise parallel zu den Traktionsabschnitten verlaufenden Seiten der Fünf- oder Sechsecke gebildet sind. Die seitlichen Traktionselemente sorgen in Verbindung mit den Traktionsabschnitten dafür, dass die gesamte Breite des Laufnetzes zur Traktion beiträgt.

Zur Verbesserung der Traktion und des Sitzes der Zwillingsreifengleitschutzkette auf dem Zwillingsreifen ist es von Vorteil, wenn das Verhältnis der aus den Traktionsabschnitten gebildeten Seiten der Fünf- oder Sechsecke zu den aus den seitlichen Traktionselementen gebildeten Seiten 13:10 ist.

In einer weiteren Ausführungsform kann eine Zwillingsreifengleitschutzkette, deren Laufnetz eine Struktur aus Sechsecken besitzt, an jeder Seite des Zwillingsreifens eine Seitenkette aufweisen, die abschnittsweise den Spursträngen gegenüberliegende Seiten der Sechsecke bildet. Weist das Laufnetz eine Struktur aus Fünfecken auf, so kann die Seitenkette mit den Spursträngen gegenüberliegenden Spitzen der Fünfecke direkt oder über Verbindungselemente verbunden sein. Die Seitenketten sichern das Laufnetz gegen ein seitliches Verrutschen auf dem Zwillingsreifen.

Eine besonders sichere Montage der Zwillingsreifengleitschutzkette kann dann erreicht werden, wenn die Zwillingsreifengleitschutzkette wenigstens eine Spannkette aufweist, die mit Zwischenabschnitten verbunden ist. Als Zwischenabschnitte sind die Bereiche der Seitenkette bezeichnet, die im Fall einer Fünfeckstruktur zwischen den Verbindungsstellen der Spitzen der Fünfecke mit den Seitenketten und im Fall einer Sechseckstruktur zwischen den aus den Seitenketten gebildeten Seiten der Sechsecke liegen.

Ein vorteilhaftes Verhältnis aus Gewicht und Abdeckung des Zwillingsreifens durch das Laufnetz kann erreicht werden, wenn das Laufnetz mindestens zwölf Fünf- oder Sechsecke aufweist.

Eine besonders stabile und einfach herzustellende Zwillingsreifengleitschutzkette kann gemäß einer vorteilhaften Ausgestaltung dadurch erhalten werden, dass die Spurstränge und die Traktionsabschnitte des Laufnetzes aus einer einzigen in Umfangsrichtung durchgehenden Kette gebildet sind.

Im Folgenden ist die Erfindung beispielhaft anhand einer Ausführungsform mit Bezug auf die Zeichnungen näher erläutert. Die bei der Ausführungsform beispielhaft dargestellte Merkmalskombination kann nach Maßgabe der obigen Ausführungen entsprechend der für einen bestimmten Anwendungsfall notwendigen Eigenschaften der erfindungsgemäßen Zwillingsreifengleitschutzkette durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt.

In den Zeichnungen werden für Elemente gleicher Funktion und/oder gleichen Aufbau stets dieselben Bezugszeichen verwendet.

Es zeigen:
- Fig. 1: den auf eine Zeichenebene projizierten Aufbau des erfindungsgemäßen Laufnetzes mit einer Struktur aus Sechsecken in einer schematischen Darstellung;
- Fig. 2: eine schematische Draufsicht auf die Lauffläche eines mit der erfindungsgemäßen Zwillingsreifengleitschutzkette ausgestatteten Zwillingsreifens, wobei das Laufnetz eine Struktur aus Sechsecken aufweist.

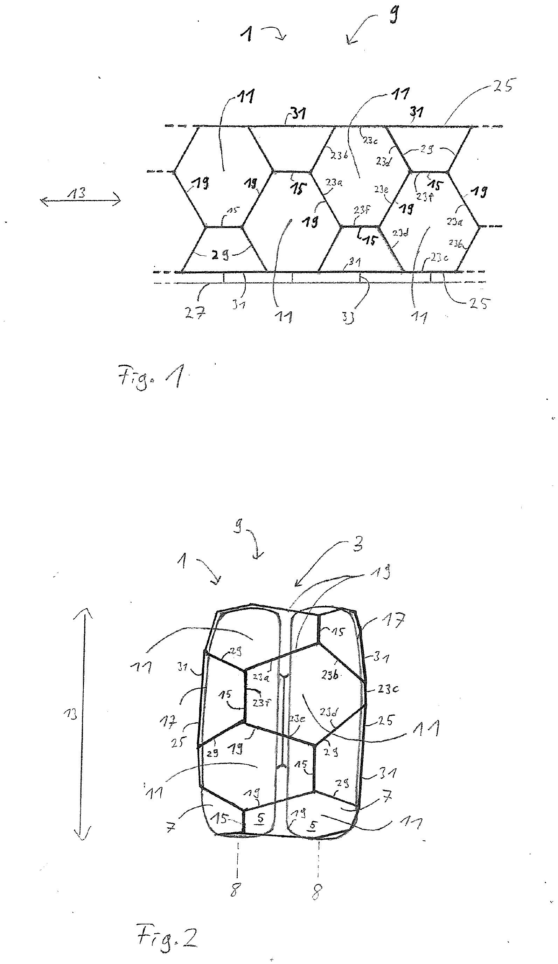

In der schematischen Darstellung der Fig. 1 sind sämtliche Elemente der erfindungsgemäßen Zwillingsreifengleitschutzkette 1 auf die Zeichenebene abgewickelt gezeigt. Bei dem Ausführungsbeispiel handelt es sich um eine Zwillingsreifengleitschutzkette, deren Laufnetz eine Struktur aus Sechsecken aufweist. Ein Laufnetz mit einer Struktur aus Fünfecken ist im Wesentlichen analog aufgebaut. Die Fig. 1 ist nicht maßstabsgetreu.

Die Einzelstränge der Zwillingsreifengleitschutzkette 1 können aus Kettenelementen wie Rundstahlgliedern, Profilstahlgliedern, Kettenlaschenstegen und, wenigstens zum Teil, auch aus Seilabschnitten aufgebaut sein.

Das abgewickelte Laufnetz 9 der Zwillingsreifengleitschutzkette 1 erstreckt sich entlang der Umfangsrichtung 13. Das Laufnetz 9 ist seitlich durch die Seitenketten 25 begrenzt. Die Seitenketten 25 verlaufen parallel zur Umfangsrichtung 13. An einer Seite weist das Laufnetz 9 eine parallel zum Laufnetz 9 verlaufende Spannkette 27 auf. Die Spannkette 27 kann mit der benachbarten Seitenkette 25 verbunden sein, entweder durch eine direkte Verbindung von Kettengliedern der beiden Ketten 25 und 27 oder durch zwischen den beiden Ketten angeordnete Verbindungselemente 33.

Die Struktur des Laufnetzes 9 ist durch eine in Umfangsrichtung 13 verlaufende Abfolge von Sechsecken 11 gebildet. Die Sechsecke 11 liegen so aneinander an, dass je zwei Sechsecke 11 jeweils eine Seite 23a oder 23d gemeinsam haben. Dadurch liegen die Sechsecke 11 in Umfangsrichtung 13 gesehen abwechselnd an einer der beiden Seitenketten 25 an.

Jedes der Sechsecke 11 weist eine Seite 23f auf, die innerhalb des Laufnetzes 9 parallel zur Umfangsrichtung 13 verläuft und je einen der Spurstränge 15 bildet. Jeder Spurstrang 15 fluchtet jeweils mit dem in Umfangsrichtung 13 übernächsten Spurstrang 15, so dass das Laufnetz 9 in Umfangsrichtung 13 zwei nebeneinander liegende Folgen von Spursträngen 15 bildet. Jede dieser Folgen von Spursträngen 15 kommt auf der Lauffläche 9 eines der beiden Reifen 5 zu liegen, wie es in Fig. 2 gezeigt wird.

Die Seiten 23a und 23e der Sechsecke 11 verlaufen im Wesentlichen diagonal zur Umfangsrichtung 13 und bilden die Traktionsabschnitte 19. An die Traktionsabschnitte 19 schließen sich quer zur Umfangsrichtung 13 die seitlichen Traktionselemente 29 an, welche aus den Seiten 23d und 23b der Sechsecke 11 gebildet sind. Durch die Traktionsabschnitte 19 und die seitlichen Traktionselemente 29 kann über die gesamte Breite des Laufnetzes 9 zur Traktion beigetragen werden.

Die die Spurstränge 15 bildenden Seiten 23f der Sechsecke 11 sind vorzugsweise kürzer als die die Traktionsabschnitte 19 bildenden Seiten 23a und 23e. Dies ermöglicht eine häufige Folge von Traktionsabschnitten 19 entlang der Umfangsrichtung 13.

Die Seitenketten 25 bilden die Seiten 23c der Sechsecke 11 und die Zwischenabschnitte 31. Die Seitenketten 25 können bevorzugt aus durchgehenden Ketten gebildet sein. Alternativ können die Seiten 23b und 23d direkt oder durch Verbindungselemente, beispielsweise durch Ringe, miteinander verbunden sein. Dann fehlt die Seite 23c und das Laufnetz 9 weist eine Struktur aus Fünfecken auf. Die Seitenketten 25 können dann mit den Verbindungsstellen der Seiten 23b und 23d verbunden sein.

Die Abfolge von Traktionsabschnitten 19 und Spursträngen 15 kann in Umfangsrichtung 13 aus einer durchgehenden Kette gebildet sein. Sind die beiden Seitenketten 25 ebenfalls aus durchgehenden Ketten gebildet, so ergibt sich ein besonders einfacher Aufbau des Laufnetzes 9, da die Seitenketten 25 mit den seitlichen Traktionselementen 29 versehen werden können, durch deren offenen Enden dann eine durchgehende Kette durchgeführt werden kann, welche die Traktionsabschnitte 19 und die Spurstränge 15 bildet.

Anhand der Fig. 2 wird im Folgenden der Aufbau des Ausführungsbeispiels der Fig. 1 im montierten Zustand an einem Zwillingsreifen beschrieben.

Der Zwillingsreifen 3 ist aus den beiden Reifen 5 gebildet. Die beiden Reifen 5 besitzen die beiden in Umfangsrichtung 13 durchgehenden Laufflächen 7. Um diese beiden Laufflächen 7 ist das Laufnetz 9 der Zwillingsreifengleitschutzkette 1 angeordnet. Das Laufnetz 9 verläuft so um den Zwillingsreifen 3, dass die Spurstränge 15 jeweils im Bereich zwischen den Laufflächenmitten 8 der beiden Reifen 5 zu liegen kommen.

Von jedem Spurstrang 15 verläuft zum benachbarten Spurstrang 15 jeweils ein Traktionsabschnitt 19. Jeder Traktionsabschnitt 19 verläuft teilweise über die beiden Laufflächen 7 beider Reifen 5, so dass sich für den Zwillingsreifen 3 ein durchgehender Traktionsabschnitt 19 ergibt. Um die gesamte Breite des Zwillingsreifens 3 abzudecken, schließen sich an beiden Seiten der Traktionsabschnitte 19 die seitlichen Traktionselemente 29 an.

Die Sechsecke 11 übergreifen jeweils mit ihren den Spursträngen 15 gegenüberliegenden Bereichen die Reifenschultern 17 der Reifen 5. Die Seiten 23c der Sechsecke 11 befinden sich an den Seiten der Reifen 5. Dort sind sie Teil der Seitenketten 25 und verhindern ein seitliches Verrutschen des Laufnetzes 9 auf dem Zwillingsreifen 3. Auf den Laufflächen 7 sind die Sechsecke 11 also an ihren den Spursträngen 15 gegenüberliegenden Seiten offen.

Die Zwillingsreifengleitschutzkette 1 der dargestellten Ausführungsform weist zwölf der in Umfangsrichtung 13 aufeinanderfolgenden Sechsecke 11 auf.

Die Spurstränge 15 sind so dimensioniert, dass sie kürzer als eine in Umfangsrichtung 13 verlaufende Breite der Reifenaufstandfläche (nicht gezeigt) sind.

**Bezugszeichenliste**

| | |
|---|---|
| 1 | Zwillingsreifengleitschutzkette |
| 3 | Zwillingsreifen |
| 5 | Reifen |
| 7 | Lauffläche |
| 8 | Laufflächenmitte |
| 9 | Laufnetz |
| 11 | Fünf- oder Sechseck |
| 13 | Umfangsrichtung |
| 15 | Spurstrang |
| 17 | Reifenschulter |
| 19 | Traktionsabschnitt |
| 23 a-f | Seiten des Fünf- oder Sechsecks |
| 25 | Seiten kette |
| 27 | Spannkette |
| 29 | Seitliche Traktionselemente |
| 31 | Zwischenabschnitte |
| 33 | Verbindungselemente |

## Patentansprüche

1. Zwillingsreifengleitschutzkette (1), mit einem in einem am Zwillingsreifen (3) montierten Zustand sich über die Laufflächen (7) beider Reifen (5) erstreckenden Laufnetz (9), das eine Struktur aus Fünf- oder Sechsecken (11) aufweist, wobei eine Seite (23f) der Fünf- oder Sechsecke (11) einen in Umfangsrichtung (13) verlaufenden Spurstrang (15) bildet, **dadurch gekennzeichnet, dass** die Fünf- oder Sechsecke (11) in Umfangsrichtung (13) aufeinanderfolgen und sich abwechselnd von dem Spurstrang (15) auf der Lauffläche (7) des einen Reifens (5) über die Lauffläche (7) des anderen Reifens (5) bis wenigstens zur Reifenschulter (17) des anderen Reifens (5) erstrecken.

2. Zwillingsreifengleitschutzkette (1) nach Anspruch 1, **dadurch gekennzeichnet, dass** die Fünf- oder Sechsecke (11) auf den Laufflächen (7) an ihren den Spursträngen (15) gegenüberliegenden Seiten offen sind.

3. Zwillingsreifengleitschutzkette (1) nach Anspruch 1 oder 2, **dadurch gekennzeichnet, dass** das Laufnetz (9) Traktionsabschnitte (19) aufweist, welche wenigstens überwiegend diagonal zur Umfangsrichtung (13) ausgerichtet sind und in gerader Linie, die Laufflächen (7) beider Reifen (5) übergreifend, auf den Laufflächen (7) zu liegen kommen.

4. Zwillingsreifengleitschutzkette (1) nach einem der Ansprüche 1 bis 3, **dadurch gekennzeichnet, dass** die Spurstränge (15) im Bereich zwischen den Laufflächenmitten (8) der beiden Reifen (5) zu liegen kommen.

5. Zwillingsreifengleitschutzkette (1) nach einem der Ansprüche 1 bis 4, **dadurch gekennzeichnet, dass** keine in Umfangsrichtung (13) verlaufende Mittelkette zwischen den beiden Reifen (5) vorhanden ist.

6. Zwillingsreifengleitschutzkette (1) nach einem der Ansprüche 3 bis 5, **dadurch gekennzeichnet, dass** aus den Traktionsabschnitten (19) gebildete Seiten (23a, 23e) der Fünf- oder Sechsecke (11) länger als die aus den Spursträngen (15) gebildeten Seiten (23f) sind.

7. Zwillingsreifengleitschutzkette (1) nach einem der Ansprüche 3 bis 6, **dadurch gekennzeichnet, dass** das Verhältnis der aus den Traktionsabschnitten (19) gebildeten Seiten (23a, 23e) der Fünf- oder Sechsecke (11) zu den aus den Spursträngen (15) gebildeten Seiten (23f) 13:7 ist.

8. Zwillingsreifengleitschutzkette (1) nach einem der Ansprüche 1 bis 7, **dadurch gekennzeichnet, dass** die auf einem Reifen (5) in Umfangsrichtung (13) aufeinander folgenden Spurstränge (15) miteinander fluchten.

9. Zwillingsreifengleitschutzkette (1) nach einem der Ansprüche 1 bis 8, **dadurch gekennzeichnet, dass** die Spurstränge (15) vorzugsweise kürzer als eine in Umfangsrichtung (13) verlaufende Breite einer Reifenaufstandfläche sind.

10. Zwillingsreifengleitschutzkette (1) nach einem der Ansprüche 3 bis 9, **dadurch gekennzeichnet, dass** die Zwillingsreifen-Gleitschutzkette (1) seitliche Traktionselemente (29) aufweist, die aus vorzugsweise parallel zu den Traktionsabschnitten (19) verlaufenden Seiten (23b, 23d) der Fünf- oder Sechsecke (11) gebildet sind.

11. Zwillingsreifengleitschutzkette (1) nach Anspruch 10, **dadurch gekennzeichnet, dass** das Verhältnis der aus den Traktionsabschnitten (19) gebildeten Seiten (23a, 23e) der Fünf- oder Sechsecke (11) zu den aus den seitlichen Traktionselementen (29) gebildeten Seiten (23b, 23d) 13:10 ist.

12. Zwillingsreifengleitschutzkette (1) nach einem der Ansprüche 1 bis 11, wobei das Laufnetz (9) eine Struktur aus Sechsecken (11) aufweist, **dadurch gekennzeichnet, dass** die Zwillingsreifengleitschutzkette (1) an jeder Seite des Zwillingsreifens (3) eine Seitenkette (25) aufweist, die abschnittsweise den Spursträngen (15) gegenüberliegende Seiten (23c) der Sechsecke (11) bildet.

13. Zwillingsreifengleitschutzkette (1) nach einem der Ansprüche 1 bis 12, **dadurch gekennzeichnet, dass** das Laufnetz (9) mindestens zwölf Fünf- oder Sechsecke (11) aufweist.

14. Zwillingsreifengleitschutzkette (1) nach einem der Ansprüche 3 bis 13, **dadurch gekennzeichnet, dass** die Spurstränge (15) und Traktionsabschnitte (19) des Laufnetzes (9) aus einer einzigen in Umfangsrichtung (13) durchgehenden Kette gebildet sind.

## Claims

1. Twin tyre anti-skid chain (1), comprising a continuous chain mesh (9) that extends over the treads (7) of the two tyres (5) when assembled on the twin tyre (3) and comprises a structure of pentagons and hexagons (11), a side (23f) of the pentagon or hexagon (11) forming a track line (15) that extends in the circumferential direction (13), **characterised in that** the pentagons or hexagons (11) succeed one another in the circumferential direction (13) and alternatingly extend from the track line (15) on the tread (7) of one tyre (5) over the tread (7) of the other tyre (5) at least as far as the tyre shoulder (17) of the other tyre (5).

2. Twin tyre anti-skid chain (1) according to claim 1, **characterised in that** the pentagons or hexagons (11) on the treads (7) are open at the sides thereof opposite the track lines (15).

3. Twin tyre anti-skid chain (1) according to either claim 1 or claim 2, **characterised in that** the continuous chain mesh (9) comprises traction portions (19) which are at least predominantly diagonal to the circumferential direction (13) and come to rest, extending over the treads (7) of the two tyres (5), in a straight line on the treads (7).

4. Twin tyre anti-skid chain (1) according to any of claims 1 to 3, **characterised in that** the track lines (15) come to rest in the region between the tread centres (8) of the two tyres (5).

5. Twin tyre anti-skid chain (1) according to any of claims 1 to 4, **characterised in that** there is no central chain between the two tyres (5) that extends in the circumferential direction (13).

6. Twin tyre anti-skid chain (1) according to any of claims 3 to 5, **characterised in that** sides (23a, 23e) of the pentagons or hexagons (11) that are formed by the traction portions (19) are longer than the sides (23f) that are formed by the track lines (15).

7. Twin tyre anti-skid chain (1) according to any of claims 3 to 6, **characterised in that** the ratio of the sides (23a, 23e) of the pentagons or hexagons (11) that are formed by the traction portions (19) to the sides (23f) that are formed by the track lines (15) is 13:7.

8. Twin tyre anti-skid chain (1) according to any of claims 1 to 7, **characterised in that** the track lines (15) that succeed one another on a tyre (5) in the circumferential direction (13) are aligned with one another.

9. Twin tyre anti-skid chain (1) according to any of claims 1 to 8, **characterised in that** the track lines (15) are preferably shorter than a width of a tyre contact surface extending in the circumferential direction (13).

10. Twin tyre anti-skid chain (1) according to any of claims 3 to 9, **characterised in that** the twin tyre anti-skid chain (1) comprises lateral traction elements (29) which are formed by sides (23b, 23d) of the pentagons or hexagons (11) that preferably extend in parallel with the traction portions (19).

11. Twin tyre anti-skid chain (1) according to claim 10, **characterised in that** the ratio of the sides (23a, 23e) of the pentagons or hexagons (11) that are formed by the traction portions (19) to the sides (23b, 23d) that are formed by the lateral traction elements (29) is 13:10.

12. Twin tyre anti-skid chain (1) according to any of claims 1 to 11, the continuous chain mesh (9) having a structure formed of hexagons (11), **characterised in that** the twin tyre anti-skid chain (1) comprises a side chain (25) on each side of the twin tyre (3), which side chain forms, in portions, the sides (23c) of the hexagons (11) opposite the track lines (15).

13. Twin tyre anti-skid chain (1) according to any of claims 1 to 12, **characterised in that** the continuous chain mesh (9) comprises at least twelve pentagons or hexagons (11).

14. Twin tyre anti-skid chain (1) according to any of claims 3 to 13, **characterised in that** the track lines (15) and traction portions (19) of the continuous chain mesh (9) are formed by a single chain that is continuous in the circumferential direction (13).

## Revendications

1. Chaîne anti-patinage (1) pour roues jumelées, comprenant un treillis de roulement (9), qui, dans un état monté sur la roue jumelée (3), s'étend par-dessus les bandes de roulement (7) des deux pneumatiques (5), et qui présente une structure en pentagones ou hexagones (11), un côté (23f) des pentagones ou des hexagones (11) formant un brin de direction de marche (15), qui s'étend dans la direction périphérique (13),
**caractérisée en ce que** les pentagones ou les hexagones (11) se succèdent dans la direction périphérique (13) et s'étendent de manière alternée, à partir du brin de direction de marche (15), sur la bande de roulement (7) d'un pneumatique (5) et par-dessus la bande de roulement (7) de l'autre pneumatique (5), jusqu'au moins le flanc de pneumatique (17) dudit autre pneumatique (5).

2. Chaîne anti-patinage (1) pour roues jumelées selon la revendication 1, **caractérisée en ce que** les pentagones ou hexagones (11) sont ouverts sur les bandes de roulement (7), sur leurs côtés opposés aux brins de direction de marche (15).

3. Chaîne anti-patinage (1) pour roues jumelées selon la revendication 1 ou la revendication 2, **caractérisée en ce que** le treillis de roulement (9) présente des tronçons de traction (19), qui sont orientés au moins de manière prépondérante de manière diagonale par rapport à la direction périphérique (13), et viennent à s'appliquer sur les bandes de roulement (7) de manière rectiligne, en surmontant les bandes de roulement (7) des deux pneumatiques (5).

4. Chaîne anti-patinage (1) pour roues jumelées selon l'une des revendications 1 à 3, **caractérisée en ce que** les brins de direction de marche (15) viennent à se placer dans la zone entre les milieux (8) des bandes de roulement des deux pneumatiques (5).

5. Chaîne anti-patinage (1) pour roues jumelées selon l'une des revendications 1 à 4, **caractérisée en ce qu'**il n'est prévu aucune chaîne centrale s'étendant dans la direction périphérique (13) entre les deux pneumatiques (5).

6. Chaîne anti-patinage (1) pour roues jumelées selon l'une des revendications 3 à 5, **caractérisée en ce que** des côtés (23a, 23e) des pentagones ou hexagones (11), formant les brins de traction (19), sont plus longs que les côtés (23f) formant les brins de direction de marche (15).

7. Chaîne anti-patinage (1) pour roues jumelées selon l'une des revendications 3 à 6, **caractérisée en ce que** le rapport des côtés (23a, 23e) formant les tronçons de traction (19) des pentagones ou des hexagones (11) aux côtés (23f) formant les brins de direction de marche (15) est de 13:7.

8. Chaîne anti-patinage (1) pour roues jumelées selon l'une des revendications 1 à 7, **caractérisée en ce que** les brins de direction de marche (15) se succédant dans la direction périphérique (13) sur un pneumatique (5), sont mutuellement alignés.

9. Chaîne anti-patinage (1) pour roues jumelées selon l'une des revendications 1 à 8, **caractérisée en ce que** les brins de direction de marche (15) sont de préférence plus courts qu'une largeur d'une surface d'appui au sol des pneumatiques, qui s'étend dans la direction périphérique (13).

10. Chaîne anti-patinage (1) pour roues jumelées selon l'une des revendications 3 à 9, **caractérisée en ce que** la chaîne anti-patinage (1) pour roues jumelées présente des éléments de traction latéraux (29) formés par des côtés (23b, 23d) des pentagones ou des hexagones (11), qui de préférence s'étendent parallèlement aux tronçons de traction (19).

11. Chaîne anti-patinage (1) pour roues jumelées selon la revendication 10, **caractérisée en ce que** le rapport des côtés (23a, 23e) des pentagones ou des hexagones (11), qui forment les tronçons de traction (19), aux côtés (23b, 23d), qui forment les éléments de traction latéraux (29), est de 13:10.

12. Chaîne anti-patinage (1) pour roues jumelées selon l'une des revendications 1 à 11, dans laquelle le treillis de roulement (9) présente une structure en hexagones (11), **caractérisée en ce que** la chaîne anti-patinage (1) pour roues jumelées comporte, de chaque côté de la roue jumelée (3), une chaîne latérale (25), qui forme par secteurs, des côtés (23c) des hexagones (11), opposés aux brins de direction de marche (15).

13. Chaîne anti-patinage (1) pour roues jumelées selon l'une des revendications 1 à 12, **caractérisée en ce que** le treillis de roulement (9) comprend au moins douze pentagones ou hexagones (11).

14. Chaîne anti-patinage (1) pour roues jumelées selon l'une des revendications 3 à 13, **caractérisée en ce que** les brins de direction de marche (15) et les tronçons de traction (19) du treillis de roulement (9) sont formés d'une seule chaîne continue dans la direction périphérique (13).
